(19) Europäisches Patentamt / European Patent Office / Office européen des brevets

(11) **EP 4 524 186 A1**

(12) **EUROPEAN PATENT APPLICATION**
published in accordance with Art. 153(4) EPC

(43) Date of publication:
**19.03.2025 Bulletin 2025/12**

(21) Application number: **23803632.1**

(22) Date of filing: **12.05.2023**

(51) International Patent Classification (IPC):
*C08J 9/04* (2006.01)          *B32B 5/28* (2006.01)
*C08L 97/00* (2006.01)          *C08L 101/00* (2006.01)

(52) Cooperative Patent Classification (CPC):
**B32B 5/28; C08J 9/04; C08L 97/00; C08L 101/00**

(86) International application number:
**PCT/JP2023/017881**

(87) International publication number:
**WO 2023/219158 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.05.2022 JP 2022078699**

(71) Applicant: **Super Resin, Inc.**
**Inagi-shi, Tokyo 206-0822 (JP)**

(72) Inventors:
• **KUNITA, Maiko**
**Inagi-shi, Tokyo 206-0822 (JP)**
• **ICHIKAWA, Daiki**
**Inagi-shi, Tokyo 206-0822 (JP)**
• **TAYAMA, Kosuke**
**Inagi-shi, Tokyo 206-0822 (JP)**
• **MIZUNO, Yasuko**
**Inagi-shi, Tokyo 206-0822 (JP)**

(74) Representative: **Zacco Sweden AB**
**P.O. Box 5581**
**Löjtnantsgatan 21**
**114 85 Stockholm (SE)**

(54) **FOAMED BODY AND LAYERED STRUCTURE**

(57) A foam including a modified lignin chemically modified by polyethylene glycol, and a laminated structure including a first fiber-reinforced resin layer containing a resin and a fiber, a foam layer including the foam, and a second fiber-reinforced resin layer containing a resin and a fiber in this order.

[Figure 1]

**Description**

Technical Field

The present invention relates to a foam and a laminated structure, in which a biomass resource is used.

Background Art

Lignin is a natural polymer compound extracted from plant such as trees, and has been known from long ago. However, lignin largely varies in structure and is hardly handled as an industrial material. A modified lignin which has been recently extracted by a new procedure is high in structural uniformity, and is expected to be used as an industrial material (for example, Patent Literature 1).

A modified lignin is studied about use thereof in combination with various resins. For example, Patent Literature 2 describes a cured product which is obtained by direct reaction of a modified lignin and an epoxy compound for the purpose of effective use of lignin as a woody biomass material.

Citation List

Patent Literature

Patent Literature 1: Japanese Patent Laid-Open No. 2017-197517
Patent Literature 2: Japanese Patent Laid-Open No. 2019-108490

Summary of Invention

The present invention encompasses the following embodiments.

<1> A foam including a modified lignin chemically modified by polyethylene glycol.
<2> The foam according to <1>, further including a resin.
<3> The foam according to <2>, wherein the resin includes at least one selected from the group consisting of a phenol resin, an epoxy resin, a cyanate ester resin, and a urethane resin.
<4> The foam according to <2> or <3>, wherein the resin includes a phenol resin.
<5> The foam according to any of <2> to <4>, wherein the resin includes an epoxy resin.
<6> The foam according to <5>, wherein the foam includes a cured product of a curable resin composition including a modified lignin, an epoxy resin and a curing agent.
<7> The foam according to any of <1> to <6>, wherein a content of the modified lignin is 10 to 60% by mass based on a total amount of the foam.
<8> The foam according to any of <1> to <7>, wherein a compressive elastic modulus in a compression test according to JIS K 7220:2006 is 20 to 80 MPa.
<9> The foam according to any of <1> to <8>, wherein a compressive strength in a compression test according to JIS K 7220:2006 is 0.4 to 2.0 MPa.
<10> A laminated structure including

a first fiber-reinforced resin layer containing a resin and a fiber,
a foam layer including the foam according to any of <1> to <9>, and
a second fiber-reinforced resin layer containing a resin and a fiber,
in this order.

<11> The laminated structure according to <10>, wherein the first fiber-reinforced resin layer and the second fiber-reinforced resin layer each include a modified lignin chemically modified by polyethylene glycol.
<12> A foam including a modified lignin and a conductive material.
<13> The foam according to <12>, wherein the modified lignin includes a modified lignin chemically modified by polyethylene glycol.
<14> The foam according to <12> or <13>, wherein a content of the modified lignin is 10 to 99% by mass based on a total amount of the foam.
<15> The foam according to any of <12> to <14>, wherein the conductive material is conductive carbon.

<16> The foam according to any of <12> to <15>, wherein the conductive material is carbon black.

<17> The foam according to any of <12> to <16>, wherein a content of the conductive material is 1 to 30% by mass based on a total amount of the foam.

<18> The foam according to any of <12> to <17>, wherein an expansion ratio of the foam is 2 to 20 times.

<19> The foam according to <12> to <18>, further including a resin.

<20> The foam according to <19>, wherein the resin includes a phenol resin.

<21> The foam according to <19>, wherein a content of the resin is 1 to 89% by mass based on a total amount of the foam.

<22> The foam according to any of <1> to <9> and <12> to <21>, wherein the foam is biodegradable.

<23> A laminated structure wherein

a plurality of layers each made of the foam according to any of <12> to <22> are stacked, and contents of the conductive materials in the layers are mutually different.

<24> The laminated structure according to <23>, wherein, under the assumption that the layer located at the n-th from the outermost layer is an n-th layer and a content of the conductive material in the n-th layer is $A_n$, and the layer located at the n-1-th is an n-1-th layer and a content of the conductive material in the n-1-th layer is $A_{n-1}$, any n satisfies the following relational expression (1):

$$A_{n-1} < A_n \quad (1)$$

wherein n is an integer of 2 or more and equal to or less than the number of stacked layers each made of the foam.

<25> The laminated structure according to <23> or <24>, wherein the laminated structure is for radio wave absorption.

Brief Description of Drawings

[Figure 1] Figure 1 is a cross-sectional view illustrating a schematic configuration of a laminated structure according to the present embodiment.

[Figure 2] Figure 2 is a cross-sectional view illustrating a schematic configuration of a laminated structure according to the present embodiment.

Description of Embodiments

Hereinafter, modes for carrying out the present invention (hereinafter, also referred to as "the present embodiment".) are described in detail. The present invention is not limited to the present embodiment, and can be variously modified and carried out within the gist thereof.

[Foam]

(First embodiment)

While a fiber-reinforced resin employing a modified lignin, as shown in Patent Literature 2, is known, no foam employing lignin is known.

An object of the first embodiment is to provide a foam which exhibits excellent compressive strength even when a biomass resource is utilized, and a laminated structure employing the foam.

The foam according to the present first embodiment includes a modified lignin chemically modified by polyethylene glycol. Such a configuration can be adopted to provide a foam which exhibits excellent compressive strength even when a biomass resource is utilized, and a laminated structure employing the foam.

<Modified lignin>

The modified lignin according to the first embodiment is a modified lignin chemically modified by polyethylene glycol.

The lignin in the modified lignin is not particularly limited, and examples thereof include guaiacyl lignin (G type), syringyl lignin (S type), and p-hydroxyphenyl lignin (H type). Such lignin has a basic skeleton of a polymeric phenolic compound, and is included in general plants.

The origin of the lignin is not particularly limited, and examples thereof include woody plant-derived lignin and grass plant-derived lignin. The woody plant-derived lignin is not particularly limited, and examples thereof include softwood lignin contained in softwood (for example, Japanese cedar) and hardwood lignin contained in hardwood.

The woody plant-derived lignin contains no H type basic skeleton.

More specifically, the softwood lignin as the woody plant-derived lignin contains no S type basic skeleton and has a G type basic skeleton. The hardwood lignin has a G type basic skeleton and an S type basic skeleton.

Examples of the grass plant-derived lignin include rice lignin contained in gramineous plants (wheat straw, rice straw, corn, bamboo, and the like). The grass plant-derived lignin has all basic skeletons of H type, G type and S type.

Such lignin can be used singly or in combinations of two or more kinds thereof.

The lignin is preferably softwood lignin having a G type basic skeleton, more preferably softwood lignin derived from Japanese cedar, from the viewpoint of homogeneity of the modified lignin.

Such lignin has a basic skeleton of a polymeric phenolic compound, and is included in general plants. As lignin industrially extracted, there are known, for example, soda lignin, sulfite lignin, and kraft lignin respectively included in waste liquors (black liquors) discharged in production of pulp from plant materials (lignocellulose) as raw materials by a soda process, a sulfite process, and a kraft process.

The number average molecular weight of polyethylene glycol in the modified lignin is preferably 100 to 1000, more preferably 200 to 900, further preferably 300 to 800, still further preferably 400 to 600. The number average molecular weight can be determined as the molecular weight in terms of polyethylene glycol, by gel permeation chromatography.

The method for producing the modified lignin is not particularly limited, and examples thereof include a method described in Japanese Patent Laid-Open No. 2017-197517.

More specifically, the modified lignin chemically modified by polyethylene glycol can be obtained by, for example, pulping a plant material (lignocellulose) serving as a raw material of the lignin, with polyethylene glycol.

The pulping method is not particularly limited, and examples thereof include a method including mixing and reacting the plant material serving as a raw material of the lignin, polyethylene glycol, and an inorganic acid (for example, hydrochloric acid or sulfuric acid) as an acid catalyst.

The proportion of the polyethylene glycol blended to the plant material is preferably 200 to 1000 parts by mass, more preferably, 300 to 600 parts by mass in terms of the polyethylene glycol, based on 100 parts by mass of the plant material serving as a raw material of the lignin.

The proportion of the inorganic acid blended to the polyethylene glycol is preferably 0.1 to 2 parts by mass, more preferably 0.2 to 1 part by mass in terms of the inorganic acid (100% conversion), based on 100 parts by mass of the polyethylene glycol.

Reaction conditions under ordinary pressure include a reaction temperature of preferably 120 to 180°C, more preferably 130 to 150°C, and a reaction time of preferably 60 to 240 minutes, more preferably 60 to 120 minutes.

After completion of reaction, a known alkali (for example, ammonia or sodium hydroxide) is added at an appropriate ratio, to adjust the pH and extract the modified lignin into a solution. The pH after adjustment is preferably 8 to 14, more preferably 10 to 14, further preferably, 10.5 to 14.

Such a method not only provides pulp as a solid component, but also provides the modified lignin as a solution component (pulp waste liquor).

Next, the reaction liquid after completion of reaction may be treated by a known separation method such as filtration, pressing, or centrifugation, to separate the solid component (pulp) from a reaction product and recover the solution component (pulp waste liquor).

In this method, if necessary, the solid component (pulp) can also be washed to recover a solution (modified lignin) with which the solid component is impregnated.

Thereafter, in this method, the inorganic acid (for example, hydrochloric acid or sulfuric acid) or the like is added to adjust the pH, thereby depositing and precipitating the modified lignin. The pH after adjustment is preferably 5 or less, preferably, 3 or less, more preferably, 2 or less. The lower limit of the pH after adjustment is not particularly limited, and may be, for example, 1.5.

Thus, the modified lignin can be precipitated. The resulting precipitate can be recovered by, for example, a known method such as filtration, pressing, or centrifugation, thereby providing the modified lignin as a solid content.

The content of the modified lignin in the foam according to the first embodiment is preferably 10 to 100% by mass, more preferably 10 to 70% by mass, further preferably 10 to 60% by mass based on the total amount of the foam from the viewpoint of retention of excellent compressive strength with an increase in amount of a biomass resource.

<Resin>

The foam according to the first embodiment preferably includes a resin. The resin can be included to allow the foam to be enhanced in mechanical strength, and enhanced in compressive strength and compressive elastic modulus.

The resin is not particularly limited, and examples thereof include a phenol resin, an epoxy resin, a cyanate ester resin, and a urethane resin. In particular, an epoxy resin and/or a phenol resin are/is preferably included from the viewpoint of enhancements in compressive strength and compressive elastic modulus.

(Epoxy resin)

In a case where the foam according to the first embodiment includes an epoxy resin, the foam may include a cured product of a curable resin composition including a modified lignin, an epoxy resin and a curing agent.

The epoxy resin in the first embodiment is preferably an epoxy resin having two or more epoxy groups in one molecule. The epoxy resin is not particularly limited, and examples thereof include a glycidyl ether type epoxy resin, a glycidyl amine type epoxy resin, and a glycidyl ester type epoxy resin.

Epoxy resins are classified into various epoxy resins depending on the difference in main backbone, and examples of the above respective types of epoxy resins include bisphenol type epoxy resins such as a bisphenol A type epoxy resin, a bisphenol F type epoxy resin, and a bisphenol S type epoxy resin; alicyclic epoxy resins such as a dicyclopentadiene type epoxy resin; aliphatic linear epoxy resins; novolac type epoxy resins such as a phenol novolac type epoxy resin, a cresol novolac type epoxy resin, a bisphenol A novolac type epoxy resin, a bisphenol F novolac type epoxy resin, a phenol aralkyl novolac type epoxy resin, and a biphenyl aralkyl novolac type epoxy resin; stilbene type epoxy resins; naphthalene backbone-containing epoxy resins such as a naphthol novolac type epoxy resin, and a naphthol aralkyl type epoxy resin; biphenyl type epoxy resins; xylylene type epoxy resins; and dihydroanthracene type epoxy resins.

In a case where the epoxy resin is used, a curing agent, a curing aid, and the like of the epoxy resin may be, if necessary, used in combination.

The amount of compounding of the epoxy resin in the foam according to the first embodiment is preferably 0 to 90% by mass, more preferably 5 to 85% by mass, further preferably 10 to 80% by mass based on the total amount of the foam from the viewpoint of retention of excellent compressive strength with an increase in amount of a biomass resource.

(Curing agent)

The curable composition according to the first embodiment preferably includes a curing agent. The curing agent is not particularly limited as long as it can cure the epoxy resin, and, for example, an amine curing agent such as an aminophenylsulfone curing agent, a dicyandiamide curing agent, an aromatic amine curing agent, a boron halide-amine complex, and any other amine curing agent, a urea curing agent, an imidazole curing agent, a thiol curing agent, any other amine curing agent, an acid anhydride, and a boron chloride-amine complex can be used. In particular, an amine curing agent is preferred, at least one selected from an aminophenylsulfone curing agent, a dicyandiamide curing agent, an aromatic amine curing agent, and a boron halide-amine complex is more preferred, and an aminophenylsulfone curing agent or a dicyandiamide curing agent is further preferred.

The amount of the curing agent blended in the curable resin composition according to the present embodiment is preferably 0.4 to 1 time, more preferably 0.5 to 0.8 times in terms of the molar number of active hydrogen in the curing agent based on the total molar number of the epoxy group in the epoxy resin.

The amount of the amine curing agent blended in the curable resin composition according to the first embodiment is preferably 0.4 to 1 time, more preferably 0.5 to 0.8 times in terms of the molar number of active hydrogen in the amine curing agent based on the total molar number of the epoxy group in the epoxy resin.

Examples of a commercially available product of the dicyandiamide curing agent include DICY7 and DICY15 (these are manufactured by Mitsubishi Chemical Corporation), and DICYANEX1400F (manufactured by Air Products and Chemicals, Inc.).

The aromatic amine curing agent is preferably an aromatic polyamine. The aromatic amine curing agent is not particularly limited, and examples thereof include 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-di-t-butyl-5,5'-diisopropyl-4,4'-diaminodiphenylmethane, 3,3',5,5'-tetra-t-butyl-4,4'-diaminodiphenylmethane, 4,4'-diaminodiphenylmethane, 4,4'-diaminodiphenylsulfone, 3,3'-diaminodiphenylsulfone, m-phenylenediamine, m-xylylenediamine, and diethyltoluenediamine.

Examples of the boron halide-amine complex include a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, a boron trifluoride-dibenzylamine complex, a boron trichloride-aniline complex, a boron trichloride-p-chloroaniline complex, a boron trichloride-ethylamine complex, a boron trichloride-isopropylamine complex, a boron trichloride-benzylamine complex, a boron trichloride-dimethylamine complex, a boron trichloride-diethylamine complex, a boron trichloride-dibutylamine complex, a boron trichloride-piperidine complex, a boron trichloride-dibenzylamine complex, and a boron trichloride--N,N-dimethyloctylamine complex.

The urea curing agent is not particularly limited as long as it has a dimethylureido group in its molecule and is heated at high temperature to generate an isocyanate group and dimethylamine and these activate an epoxy group, and examples thereof can include an aromatic dimethylurea in which a dimethylureido group is bound with an aromatic ring, and an aliphatic dimethylurea in which a dimethylureido group is bound with an aliphatic compound.

The imidazole curing agent is not particularly limited, and examples thereof include an imidazole adduct, a clathrate imidazole, a microcapsule type imidazole, and an imidazole compound in which a stabilizer is coordinated.

The thiol curing agent is not particularly limited, and examples thereof include pentaerythritol tetrakis(3-mercaptobutyrate) and a thiol group-containing polyether resin. Examples of a commercially available product of the thiol curing agent include Karenz MT PE1 (manufactured by Showa Denko K.K.) and Polythiol QE-340M (manufactured by Toray Fine Chemicals Co., Ltd.).

(Curing accelerator)

The curable composition according to the first embodiment preferably includes a curing accelerator. The curing accelerator is not particularly limited, and examples thereof include a boron halide-amine complex curing accelerator, an aromatic urea curing accelerator, an imidazole curing accelerator, and a phosphorus curing accelerator. In particular, a boron halide-amine complex curing accelerator or an aromatic urea curing accelerator is preferably included.

Examples of the boron halide-amine complex curing accelerator include a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, a boron trifluoride-dibenzylamine complex, a boron trichloride-aniline complex, a boron trichloride-p-chloroaniline complex, a boron trichloride-ethylamine complex, a boron trichloride-isopropylamine complex, a boron trichloride-benzylamine complex, a boron trichloride-dimethylamine complex, a boron trichloride-diethylamine complex, a boron trichloride-dibutylamine complex, a boron trichloride-piperidine complex, a boron trichloride-dibenzylamine complex, and a boron trichloride-N,N-dimethyloctylamine complex. In particular, boron fluoride-amine complex curing accelerators such as a boron trifluoride-aniline complex, a boron trifluoride-p-chloroaniline complex, a boron trifluoride-ethylamine complex, a boron trifluoride-isopropylamine complex, a boron trifluoride-benzylamine complex, a boron trifluoride-dimethylamine complex, a boron trifluoride-diethylamine complex, a boron trifluoride-dibutylamine complex, a boron trifluoride-piperidine complex, and a boron trifluoride-dibenzylamine complex are preferred.

The boron halide-amine complex may also function as a curing agent, as described above. In a case where the boron halide-amine complex is included as a curing agent, the curing accelerator preferably is not the boron halide-amine complex curing accelerator.

The aromatic urea curing accelerator is not particularly limited, and examples thereof include 3-phenyl-1,1-dimethylurea, 3-(3-chloro-4-methylphenyl)-1,1-dimethylurea, 3-(3,4-dichlorophenyl)-1,1-dimethylurea, and toluene bisdimethylurea. Examples of a commercially available product of the aromatic urea curing accelerator include DCMU-99 (manufactured by Hodogaya Chemical Co., Ltd.) and "Omicure (registered trademark)" 24 (manufactured by PTI Japan Limited).

The imidazole curing accelerator is not particularly limited, and examples thereof include 1-benzyl-2-methylimidazole, 1-benzyl-2-ethylimidazole, 1-cyanoethyl-2-methylimidazole, 1-cyanoethyl-2-ethyl-4-methylimidazole, and 1-cyanoethyl-2-phenylimidazole. Examples of a commercially available product of the imidazole curing accelerator include "Cureduct (registered trademark)" P-0505, 1B2MZ, 1B2PZ, 2MZ-CN, 2E4MZ-CN, and 2PZ-CN (these are manufactured by Shikoku Chemicals Corporation).

The phosphorus curing accelerator is not particularly limited, and examples thereof include triphenylphosphine, tri-o-tolylphosphine, tris(p-methoxyphenyl) phosphine, triphenylphosphine triphenylborane, and tetraphenylphosphonium tetraphenyl borate. Examples of a commercially available product of the phosphorus compound include "Hokuko TPP (registered trademark)", "TOTP (registered trademark)", and "TPP-K (registered trademark)" (these are manufactured by Hokko Chemical Industry Co., Ltd.).

The amount of the curing accelerator blended is preferably 1 to 8 parts by mass, more preferably 1.5 to 6 parts by mass, further preferably 2 to 4 parts by mass based on 100 parts by mass of the epoxy resin.

(Phenol resin)

Examples of the phenol resin include a resol-based phenol by using a phenol compound or its derivative and an aldehyde compound as raw materials and reacting them under an alkaline catalyst, and a novolac-based phenol obtained by using a phenol compound or its derivative and an aldehyde compound as raw materials and reacting them under an acid catalyst. The phenol compound is not particularly limited, and examples thereof include phenol, cresol, xylenol, para-alkylphenol, para-phenylphenol, and resorcinol. The aldehyde compound is not particularly limited, and examples thereof include formaldehyde, paraformaldehyde, furfural, and acetaldehyde.

The amount of the phenol resin blended in the foam according to the first embodiment is preferably 0 to 90% by mass, more preferably 5 to 85% by mass, further preferably 10 to 80% by mass based on the total amount of the foam from the viewpoint of retention of excellent compressive strength with an increase in amount of a biomass resource.

The epoxy resin and the phenol resin may be used in combination in the foam according to the first embodiment. In this case, the total amount of the epoxy resin and the phenol resin blended in the foam according to the present embodiment is preferably 0 to 90% by mass, more preferably 5 to 85% by mass, further preferably 10 to 80% by mass based on the total amount of the foam from the viewpoint of retention of excellent compressive strength with an increase in amount of a biomass resource.

(Foaming agent)

The foaming agent here used may be, for example, a foaming agent which foams by heating.

The foaming agent is not particularly limited, and examples thereof include azo compounds such as azodicarbonamide, an azodicarboxylic acid metal salt (for example, barium azodicarboxylate) and azobisisobutyronitrile, nitroso compounds such as N,N'-dinitrosopentamethylenetetramine, hydrazine derivatives such as hydrazodicarbonamide, 4,4'-oxybis(benzenesulfonyl hydrazide) and toluenesulfonyl hydrazide, semicarbazide compounds such as toluenesulfonyl semicarbazide, ammonium carbonate, sodium carbonate, ammonium hydrogen carbonate, sodium hydrogen carbonate, ammonium nitrite, sodium borohydride, anhydrous citric acid monosodium salt, and a thermally expandable microcapsule. The thermally expandable microcapsule is, for example, one in which a volatile liquid is incorporated in a thermoplastic polymer shell.

The amount of the foaming agent blended may be 1 to 80 parts by mass based on the total amount of 100 parts by mass of the modified lignin and the resin.

The density of the foam according to the first embodiment is preferably 40 to 600 $Kg/m^3$, more preferably 50 to 400 $Kg/m^3$, preferably 60 to 300 $Kg/m^3$.

The compressive elastic modulus in the compression test according to JIS K 7220:2006, of the foam according to the first embodiment, is preferably 20 to 80 MPa, more preferably 30 to 75 MPa, further preferably 40 to 70 MPa. The method for measuring the compressive elastic modulus is according to a method described in Examples.

The compressive strength in the compression test according to JIS K 7220:2006, of the foam according to the first embodiment, is preferably 0.4 to 2.0 MPa, more preferably 0.5 to 1.8 MPa, further preferably 0.6 to 1.5 MPa. The method for measuring the compressive strength is according to a method described in Examples.

The foam according to the first embodiment is preferably biodegradable. The modified lignin included in the foam according to the present embodiment allows biodegradability to be exhibited. Whether or not biodegradability is exhibited can be determined by whether or not a crack is generated in standing in the presence of a white-rot fungus under conditions of a temperature of 23°C and a humidity of 50 to 60% for 150 days.

More specifically, such determination is made by the following method.

The cured product is cut out, and processed into a test piece of 50 mm × 50 mm × 2 mm, and the test piece is placed in a hyphal bottle with a white-rot fungus placed therein, and left to still stand under conditions of a temperature of 23°C and a humidity of 50 to 60% for 150 days. The test piece left to still stand is cut with a cutting machine (Labo Cutter "MC-120" manufactured by Maruto Instrument Co., Ltd.) provided with a diamond blade, and thereafter a cross section thereof is polished with a polishing machine (desktop sample polishing machine "IM-P2" manufactured by IMT Co., Ltd.), and treated with a polishing material (Alumina Polishing Material "IMT Alumina Powder Grit 1 μm" manufactured by IMT Co., Ltd.), to provide a mirrored surface. The resulting cross section is observed and imaged (magnification of 600x) with an optical microscope (Digital Microscope "VHX-6000" manufactured by Keyence Corporation), the image taken is binarized by binarization software (Image J), and the presence of any crack is evaluated with the resulting image.

[Method for producing foam]

The foam according to the present embodiment is obtained by mixing a resin component containing the modified lignin, and the foaming agent, and packing the mixture in a mold and thermally curing the mixture. The heating temperature is not particularly limited, and may be, for example, 50 to 200°C.

[Second embodiment]

An object of the second embodiment is to provide a foam which is excellent in radio wave absorption properties even when a biomass resource is utilized, and a laminated structure employing the foam.

The foam according to the second embodiment includes a modified lignin and a conductive material. Such a configuration can be adopted to provide a foam which is excellent in radio wave absorption properties even when a biomass resource is utilized, and a laminated structure employing the foam.

The reason why such properties are obtained, while not particularly limited, is considered as follows.

Radio wave absorption can be made by, for example, adding a conductive material such as carbon black and then controlling a real part and an imaginary part of a complex relative permittivity, in order to obtain radio wave absorption properties. However, the amount of addition of a conductive material such as carbon black is limited and desired real and imaginary parts of a complex relative permittivity were difficult to obtain. In particular, the value of the imaginary part depends on the amount of addition of the conductive material and a desired value of the imaginary part was difficult to obtain with a small amount of addition of the conductive material, but it has been found that in the foam according to the second embodiment, inclusion of the modified lignin allows a desired value of the imaginary part to be obtained, even with a small amount of addition of a conductive material.

The foam according to the second embodiment is basically common to the above foam according to the first embodiment, except that a conductive material is contained.

In the description of the foam according to the second embodiment, the description of any configuration common to that of the foam according to the first embodiment is omitted and any configuration different from that of the foam according to the first embodiment is described.

(Conductive material)

Examples of the conductive material include conductive carbon such as carbon black, graphene, a carbon nanotube, a carbon nanofiber, a carbon microfiber, a carbon microcoil and a carbon nanocoil, conductive fibers such as a metal fiber and a carbon fiber, and conductive inorganic oxides such as iron oxide, tin oxide, titanium oxide, zinc oxide, cadmium oxide and iridium oxide. In particular, conductive carbon is preferred and carbon black is more preferred.

The carbon black is not particularly limited, and examples thereof include oil furnace black, acetylene black, and such oil furnace black or acetylene black subjected to hydrophilization, hydrophobization, oxidation, reduction, acidification, basification, or organification.

The content of the carbon black in the foam according to the second embodiment is preferably 1 to 30% by mass, more preferably 2 to 20% by mass, further preferably 3 to 15% by mass based on the total amount of the foam.

The modified lignin in the foam according to the second embodiment preferably includes a modified lignin chemically modified by polyethylene glycol. The modified lignin chemically modified by polyethylene glycol is as described above.

The content of the modified lignin in the foam according to the second embodiment is preferably 10 to 99% by mass, more preferably 20 to 98% by mass, further preferably 30 to 98% by mass, further preferably 60 to 97% by mass, further preferably 70 to 97% by mass based on the total amount of the foam from the viewpoint of more enhancements in radio wave absorption properties.

The foam according to the second embodiment may include a resin. The resin preferably includes a phenol resin.

The content of the resin in the foam according to the second embodiment is preferably 1 to 89% by mass, more preferably 2 to 87% by mass, preferably 15 to 85% by mass based on the total amount of the foam.

In a case where the foam according to the second embodiment contains the resin, the content of the modified lignin is preferably 10 to 99% by mass, more preferably 20 to 80% by mass, preferably 30 to 70% by mass based on the total amount of the foam.

The expansion ratio of the foam according to the second embodiment is preferably 2 to 20 times, more preferably 3 to 15 times, preferably 3 to 10 times.

The foam according to the present embodiment is preferably biodegradable. The modified lignin included in the foam according to the present embodiment allows biodegradability to be exhibited. Whether or not biodegradability is exhibited can be determined by whether or not biodegradation is confirmed in standing in the presence of a white-rot fungus under conditions of a temperature of 23°C and a humidity of 50 to 60% for 150 days.

More specifically, such determination is made by the following method.

The foam is cut out, and processed into a test piece of 50 mm × 50 mm × 2 mm, and the test piece is placed in a hyphal bottle with a white-rot fungus placed therein, and left to still stand under conditions of a temperature of 23°C and a humidity of 50 to 60% for 150 days. The test piece left to still stand is cut with a cutting machine (Labo Cutter "MC-120" manufactured by Maruto Instrument Co., Ltd.) provided with a diamond blade, and thereafter a cross section thereof is polished with a polishing machine (desktop sample polishing machine "IM-P2" manufactured by IMT Co., Ltd.), and treated with a polishing material (Alumina Polishing Material "IMT Alumina Powder Grit 1 μm" manufactured by IMT Co., Ltd.). The resulting cross section is observed and imaged (magnification of 600x) with an optical microscope (Digital Microscope "VHX-6000" manufactured by Keyence Corporation), the image taken is binarized by binarization software (Image J), and the presence of a biodegradation phenomenon such as any crack is evaluated with the resulting image.

The foam according to the second embodiment is excellent in radio wave absorption properties, and thus is used in a radio wave absorber.

[Laminated structure]

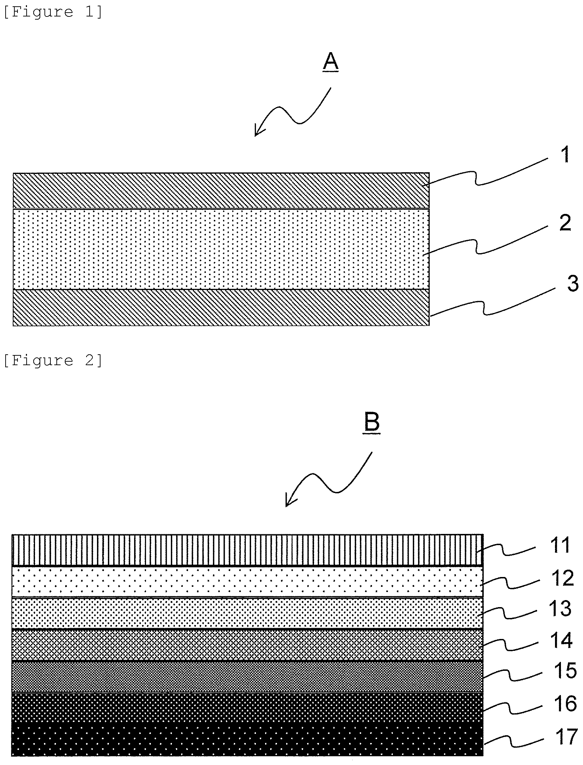

Figure 1 is a cross-sectional view illustrating a schematic configuration of a laminated structure A according to the present embodiment. As illustrated in Figure 1, the laminated structure A according to the present embodiment includes a first fiber-reinforced resin layer (1) containing a resin and a fiber, a foam layer (2) including the foam according to the present embodiment, and a second fiber-reinforced resin layer (3) containing a resin and a fiber, in this order.

The laminated structure A according to the present embodiment has the above configuration, and thus exhibits excellent mechanical properties even when a modified lignin as a biomass resource is utilized.

The foam layer includes the foam according to the present embodiment. Examples and suitable examples of various components are as described above.

The first fiber-reinforced resin layer and the second fiber-reinforced resin layer each contain a resin and a fiber.

The resin is not particularly limited, and examples thereof include an epoxy resin, a phenol resin, a cyanate ester resin, an unsaturated polyester resin, and a vinyl ester resin. Examples of the fiber include a carbon fiber, a glass fiber, an organic fiber, and a natural fiber.

The first fiber-reinforced resin layer and the second fiber-reinforced resin layer each preferably include a cured product of a curable resin composition containing an epoxy resin, a modified lignin chemically modified by polyethylene glycol, and a fiber. The epoxy resin, the modified lignin, and the fiber are as exemplified above.

The foam and the laminated structure according to the present embodiment can be each widely used in aerospace applications, general industry applications such as automobile, marine vessels and railway vehicles, and sporting applications.

A laminated structure B according to the present embodiment is described as another embodiment of the laminated structure. The laminated structure B according to the present embodiment functions as a laminated structure for radio wave absorption. The laminated structure B according to the present embodiment is configured so that a plurality of layers each made of the foam according to the second embodiment (hereinafter, also referred to as "foam layer") are stacked and the respective contents of the conductive materials in the layers are mutually different. The foam layer includes the above foam according to the second embodiment. Examples and suitable examples of various components are as described above.

In the laminated structure B according to the present embodiment, preferably,

under the assumption that the layer located at the n-th from the outermost layer is an n-th layer and the content of the conductive material in the n-th layer is $A_n$, and the layer located at the n-1-th is an n-1-th layer and the content of the conductive material in the n-1-th layer is $A_{n-1}$,

any n satisfies the following relational expression (1) :

$$A_{n-1} < A_n \quad (1)$$

wherein n is an integer of 2 or more and equal to or less than the number of stacked layers each made of the foam.

The total number of layers each including the foam in the laminated structure B is not particularly limited, and may be, for example, 2 to 20, 3 to 18, or 3 to 15.

Figure 2 is a cross-sectional view illustrating a schematic configuration of the laminated structure B according to the present embodiment. Figure 2 describes a five-layered laminated structure **B,** as an example. As illustrated in Figure **2,** the laminated structure B according to the present embodiment includes a foam layer 11 including the conductive material at a content of 0% by mass, a foam layer 12 including the conductive material at a content of 1% by mass, a foam layer 13 including the conductive material at a content of 5% by mass, a foam layer 14 including the conductive material at a content of 10% by mass, and a foam layer 15 including the conductive material at a content of 20% by mass in this order. In the laminated structure B, the contents of the conductive materials in these layers are sequentially higher from the foam layer 11 toward layers located lower. For example, the foam layer 11 is here defined as a first layer; when the foam layer 12 corresponding to a second layer is adopted as reference, the content in the foam layer 12 is 1% by mass (n = 2) and the content in the foam layer 11 is 0% by mass (n = 1), and therefore the conditions of the above relational expression (1) are satisfied; when the foam layer 13 corresponding to a third layer is adopted as reference, the content in the foam layer 13 is 5% by mass (n = 3) and the content in the foam layer 12 is 1% by mass (n = 2), and therefore the conditions of the above relational expression (1) are satisfied; when the foam layer 14 corresponding to a fourth layer is adopted as reference, the content in the foam layer 14 is 10% by mass (n = 4) and the content in the foam layer 13 is 5% by mass (n = 3), and therefore the conditions of the above relational expression (1) are satisfied; and when the foam layer 15 corresponding to a fifth layer is adopted as reference, the content in the foam layer 15 is 20% by mass (n = 5) and the content in the foam layer 14 is 5% by mass (n = 4), and therefore the conditions of the above relational expression (1) are satisfied. Accordingly, the laminated structure B satisfies the relational expression (1) at any n.

The laminated structure B according to the present embodiment is used in a radio wave absorption application, and is used as, for example, a material for anechoic chambers.

Examples

Hereinafter, the present embodiment is further specifically described with reference to Examples, but the present embodiment is not limited to the following Examples.

[Compression test]

The compression test was performed by the method according to JIS K 7164:2005. A test piece was produced from the foam and sandwiched between two smooth and parallel circular pressurization plates, the resulting columnar test piece was subjected to the compression test at a constant rate in an axial direction, and thus the amount of deformation, the elastic modulus and the strength were calculated. The compression test was performed under the following conditions.

<Test conditions>

Crosshead speed: 1 to 10 mm/min
Measurement method of amount of deformation: calculated by amount of crosshead moved
Test piece size:

Shape: cuboid
Bottom surface: 100 $\times$ 100 mm
Thickness: 50 mm

[Complex relative permittivity measurement: radio wave absorption properties]

The complex relative permittivity of the foam was measured with a complex relative permittivity measurement apparatus. The complex relative permittivity measurement apparatus was mainly configured from paired lens-attached horn antennas, a network analyzer and a communication wire. The paired lens-attached horn antennas were placed so as to be opposite to each other, and a radio wave absorber serving as a measurement object was disposed between the paired lens-attached horn antennas. The network analyzer was used to send a control signal to the lens-attached horn antennas via the communication wire, convert the signal sent from the lens-attached horn antennas via the communication wire, into digital data, and thereafter calculating the complex relative permittivity of the radio wave absorber from the digital data, by use of an algorithm for material constant presumption, called Nicholson-Ross method or NIST method. In measurement of the complex relative permittivity of the foam, first, a space between the paired lens-attached horn antennas was regarded as a transmission path, to measure the transmission path in the case of no radio wave absorber disposed, namely, the air transmission characteristic. Next, the radio wave absorber was disposed, and the material constant with the air transmission characteristic as reference was identified from reflection-transmission characteristics with a radio wave absorber SP, according to a lens antenna method, thereby calculating the complex relative permittivity of the radio wave absorber. The measurement range was from 18 GHz to 26.5 GHz, and the complex relative permittivity of the foam was measured.

[Reference Example 1: production of foam]

A foaming agent was mixed and stirred with an epoxy resin, and the resulting mixture was packed in a forming mold and cured at 80 to 130°C for 30 minutes, thereby producing a foam having a density of 120 Kg/m$^3$ (corresponding to expansion of about 10 times). The compression test was performed by the above method, and the foam had a compressive strength of 1.49 MPa and a compressive elastic modulus of 75.83 MPa.

[Example 1: production of a modified lignin foam]

After a modified lignin chemically modified by polyethylene glycol and an epoxy resin were mixed and stirred at a mass ratio of 25:75, a foaming agent was further mixed and stirred therewith, and the resulting mixture was packed in a forming mold and cured at 80 to 130°C for 30 minutes, thereby producing a foam having a density of 120 Kg/m$^3$

(corresponding to expansion of about 10 times). The results of the compression test performed by the above method are shown in Table 1.

[Example 2: production of a modified lignin foam]

A foam was produced in the same manner as in Example 1 except that the mass ratio between the modified lignin and the epoxy resin was 50:50. The results of the compression test performed by the above method are shown in Table 1.

[Example 3: production of a modified lignin foam]

A foaming agent was mixed and stirred with a modified lignin, and the resulting mixture was packed in a forming mold and cured at 80 to 130°C for 30 minutes, thereby producing a foam having a density of 120 Kg/m$^3$ (corresponding to expansion of about 10 times). The results of the compression test performed by the above method are shown in Table 1.

[Table 1]

Table 1

| | | Reference Example 1 | Example 1 | Example 2 | Example 3 |
|---|---|---|---|---|---|
| Density | Kg/m$^3$ | 120 | | | |
| Curing condition | °C | 130 | | | |
| Modified lignin | % | 0 | 25 | 50 | 100 |
| Epoxy resin | % | 100 | 75 | 50 | 0 |
| Compressive strength | MPa | 1.49 | 0.86 | 1.00 | 0.34 |
| Compressive elastic modulus | MPa | 75.83 | 47.90 | 48.97 | 27.89 |

[Reference Example 2: production of foam]

A foaming agent was mixed and stirred with a phenol resin, and the resulting mixture was packed in a forming mold and cured at 80 to 130°C for 30 minutes, thereby producing a foam having a density of 120 Kg/m$^3$ (corresponding to expansion of about 10 times). The results of the compression test performed by the above method are shown in Table 1.

[Example 4: production of a modified lignin foam]

After a modified lignin and phenol resin were mixed and stirred at a mass ratio of 25:75, a foaming agent was further mixed and stirred therewith, and the resulting mixture was packed in a forming mold and cured at 80 to 130°C for 30 minutes, thereby producing a foam having a density of 120 Kg/m$^3$ (corresponding to expansion of about 10 times). The results of the compression test performed by the above method are shown in Table 2.

[Example 5: production of a modified lignin foam]

A foam was produced in the same manner as in Example 4 except that the mass ratio between the modified lignin and the phenol resin was 50:50. The results of the compression test performed by the above method are shown in Table 2.

[Example 6: production of a modified lignin foam]

A foam was produced in the same manner as in Example 4 except that the mass ratio between the modified lignin and the phenol resin was 75:25. The results of the compression test performed by the above method are shown in Table 2.
Table 2 here shows the information on Example 3, for reference.

[Table 2]

Table 2

| | | Reference Example 2 | Example 4 | Example 5 | Example 6 | Example 3 |
|---|---|---|---|---|---|---|
| Density | Kg/m$^3$ | 120 | | | | |
| Curing condition | °C | 130 | | | | |
| Modified lignin | % | 0 | 25 | 50 | 75 | 100 |
| Phenol resin | % | 100 | 75 | 50 | 25 | 0 |
| Compressive strength | MPa | 0.82 | 0.93 | 0.67 | 0.41 | 0.34 |
| Compressive elastic modulus | MPa | 33.98 | 23.33 | 62.03 | 19.27 | 27.89 |

[Reference Example 3: production of foam]

A foaming agent was mixed and stirred with a phenol resin, and the resulting mixture was packed in a forming mold and cured at 80 to 180°C for 60 minutes, thereby producing a foam having a density of 120 Kg/m$^3$ (corresponding to expansion of about 10 times). The results of the compression test performed by the above method are shown in Table 3.

[Example 7: production of a modified lignin foam]

After a modified lignin and a phenol resin were mixed and stirred at a mass ratio of 25:75, a foaming agent was further mixed and stirred therewith, and the resulting mixture was packed in a forming mold and cured at 80 to 180°C for 60 minutes, thereby producing a foam having a density of 120 Kg/m$^3$ (corresponding to expansion of about 10 times). The results of the compression test performed by the above method are shown in Table 3.

[Example 8: production of a modified lignin foam]

A foam was produced in the same manner as in Example 7 except that the mass ratio between the modified lignin and the phenol resin was 50:50. The results of the compression test performed by the above method are shown in Table 3.

[Example 9: production of a modified lignin foam]

A foam was produced in the same manner as in Example 7 except that the mass ratio between the modified lignin and the phenol resin was 75:25. The results of the compression test performed by the above method are shown in Table 3.

[Example 10: production of a modified lignin foam]

A foaming agent was mixed and stirred with a modified lignin, and the resulting mixture was packed in a forming mold and cured at 80 to 180°C for 60 minutes, thereby producing a foam having a density of 120 Kg/m$^3$ (corresponding to expansion of about 10 times). The results of the compression test performed by the above method are shown in Table 3.

[Table 3]

Table 3

| | | Reference Example 3 | Example 7 | Example 8 | Example 9 | Example 10 |
|---|---|---|---|---|---|---|
| Density | Kg/m$^3$ | 120 | | | | |
| Curing condition | °C | 180 | | | | |
| Modified lignin | % | 0 | 25 | 50 | 75 | 100 |
| Phenol resin | % | 100 | 75 | 50 | 25 | 0 |
| Compressive strength | MPa | 0.81 | 0.94 | 0.80 | 0.50 | 0.42 |

(continued)

| | | Reference Example 3 | Example 7 | Example 8 | Example 9 | Example 10 |
|---|---|---|---|---|---|---|
| Compressive elastic modulus | MPa | 28.74 | 31.06 | 34.07 | 9.69 | 21.65 |

[Example 11: production of a modified lignin foam]

After a modified lignin, an epoxy resin and a phenol resin were mixed and stirred at a mass ratio of 33.3:33.3:33.3, a foaming agent was further mixed and stirred therewith, and the resulting mixture was packed in a forming mold and cured at 80 to 130°C for 30 minutes, thereby producing a foam having a density of 120 Kg/m$^3$ (corresponding to expansion of about 10 times). The results of the compression test performed by the above method are shown in Table 4.

[Example 12: production of a modified lignin foam]

A foam was produced in the same manner as in Example 11 except that the mass ratio among the modified lignin, the epoxy resin and the phenol resin was 12.5:75:12.5. The results of the compression test performed by the above method are shown in Table 4.

[Table 4]

Table 4

| | | Example 11 | Example 12 |
|---|---|---|---|
| Density | Kg/m$^3$ | 120 | |
| Curing condition | °C | 130 | |
| Modified lignin | % | 33.3 | 12.5 |
| Epoxy resin | % | 33.3 | 75.0 |
| Phenol resin | % | 33.3 | 12.5 |
| Compressive strength | MPa | 0.57 | 1.07 |
| Compressive elastic modulus | MPa | 21.91 | 34.75 |

[Example 13: production of foam including conductive material]

After a modified lignin chemically modified by polyethylene glycol and carbon black were mixed and stirred at a mass ratio of 95:5, a foaming agent was further mixed and stirred therewith, and the resulting mixture was packed in a forming mold and cured at 80 to 130°C for 30 minutes, thereby producing a foam having a density of 240 Kg/m$^3$ (corresponding to expansion of about 5 times).

[Examples 14 to 15: production of foam including conductive material]

Respective foams of Examples 14 to 15 were produced by the same method as the method shown in Example 13 except that the ratios of carbon black blended were changed to 8% by mass and 10% by mass.

[Reference Example 4: production of foam including conductive material]

After a phenol resin and carbon black were mixed and stirred at a mass ratio of 95:5, a foaming agent was further mixed and stirred therewith, and the resulting mixture was packed in a forming mold and cured at 80 to 130°C for 30 minutes, thereby producing a foam having a density of 240 Kg/m$^3$ (corresponding to expansion of about 5 times).

[Reference Examples 5 to 7: production of foam including conductive material]

Respective foams of Reference Examples 5 to 7 were produced by the same method as the method shown in Reference Example 4 except that the ratios of carbon black blended were changed to 7.5% by mass, 8.5% by mass, and 10% by mass.

The foams of Examples 13 to 15 and Reference Examples 4 to 7 above were subjected to the above complex relative permittivity measurement. The results are shown in Table 5.

[Table 5]

| Table 5 (1/2) | | | | | | |
|---|---|---|---|---|---|---|
| Expansion of 5 times | | | | | | |
| | Example 13 | | Example 14 | | Example 15 | |
| Concentration of CB | 5% by mass | | 8% by mass | | 10% by mass | |
| Type of resin | Modified lignin | | Modified lignin | | Modified lignin | |
| Freq[GHz] | Real part | Imagin ary part | Real part | Imagin ary part | Real part | Imagin ary part |
| 18 | 2.79 | 2.08 | 3.64 | 6.36 | 3.67 | 8.40 |
| 22 | 2.62 | 1.78 | 3.47 | 5.29 | 3.62 | 6.73 |
| 26.5 | 2.45 | 1.53 | 3.2 | 4.37 | 3.39 | 5.43 |

Table 5 (2/2)

| Expansion of 5 times | | | | | | | | |
|---|---|---|---|---|---|---|---|---|
| | Reference Example 4 | | Reference Example 5 | | Reference Example 6 | | Reference Example 7 | |
| Concentration of CB | 5% by mass | | 7.5% by mass | | 8.5% by mass | | 10% by mass | |
| Type of resin | Phenol resin | | Phenol resin | | Phenol resin | | Phenol resin | |
| Freq [GHz] | Real part | Imaginary part | Real part | Imaginary part | Real part | Imaginary part | Real part | Imaginary part |
| 18 | 2.42 | 0.83 | 2.96 | 1.91 | 3.22 | 2.52 | 3.45 | 3.54 |
| 22 | 2.30 | 0.71 | 2.79 | 1.59 | 3.04 | 2.07 | 3.29 | 2.90 |
| 26.5 | 2.19 | 0.61 | 2.63 | 1.33 | 2.85 | 1.71 | 3.08 | 2.39 |

As clear from comparison between Examples and Reference Examples above, enhancements in characteristics in both the results of the real part and the imaginary part were observed in comparison between the evaluation results in Examples where the phenol resin and the modified lignin were contained and Reference Examples where no modified lignin was contained.

[Example 16: production of foam including conductive material]

A foam was produced by the same method as in Example 13 except that the amount of addition of the foaming agent was changed and the expansion ratio was set to about 10 times.

[Examples 17 to 19: production of foam including conductive material]

Respective foams of Examples 17 to 19 were produced by the same method as the method shown in Example 16 except that the ratios of carbon black blended were changed to 10% by mass, 15% by mass and 20% by mass.

[Reference Example 8: production of foam including conductive material]

A foam was produced by the same method as in Reference Example 4 except that the amount of addition of the foaming agent was changed and the expansion ratio was set to about 10 times.

[Reference Examples 9 to 13: production of foam including conductive material]

Respective foams of Reference Examples 9 to 13 were produced by the same method as the method shown in Reference Example 8 except that the ratios of carbon black blended were changed to 7.5% by mass, 10% by mass, 15% by mass, 20% by mass and 25% by mass.
The foams obtained in Examples 16 to 19 and Reference Examples 8 to 13 were subjected to the above radio wave absorption test. The results are shown in Table 6.

[Table 6]

| Table 6 (1/2) | | | | | | | | |
|---|---|---|---|---|---|---|---|---|
| Expansion of 10 times | | | | | | | | |
| | Example 16 | | Example 17 | | Example 18 | | Example 19 | |
| Concentration of CB | 5% by mass | | 10% by mass | | 15% by mass | | 20% by mass | |
| Type of resin | Modified lignin | | Modified lignin | | Modified lignin | | Modified lignin | |
| Freq [GHz] | Real part | Imaginary part | Real part | Imaginary part | Real part | Imaginary part | Real part | Imaginary part |
| 18 | 1.60 | 0.36 | 2.08 | 1.27 | 2.34 | 2.32 | 2.71 | 4.68 |
| 22 | 1.53 | 0.31 | 1.97 | 1.07 | 2.22 | 1.93 | 2.58 | 3.84 |
| 26.5 | 1.47 | 0.27 | 1.86 | 0.92 | 2.08 | 1.62 | 2.40 | 3.15 |

EP 4 524 186 A1

Table 6 (2/2)

| | Expansion of 10 times | | | | | | | | | | | |
|---|---|---|---|---|---|---|---|---|---|---|---|---|
| | Reference Example 8 | | Reference Example 9 | | Reference Example 10 | | Reference Example 11 | | Reference Example 12 | | Reference Example 13 | |
| Concentration of CB | 5% by mass | | 7.5% by mass | | 10% by mass | | 15% by mass | | 20% by mass | | 25% by mass | |
| Type of resin | Phenol resin | | Phenol resin | | Phenol resin | | Phenol resin | | Phenol resin | | Phenol resin | |
| Freq [GHz] | Real part | Imaginary part | Real part | Imaginary part | Real part | Imaginary part | Real part | Imaginary part | Real part | Imaginary part | Real part | Imaginary part |
| 18 | 1.59 | 0.29 | 1.73 | 0.45 | 1.83 | 0.55 | 2.20 | 1.12 | 2.66 | 2.19 | 2.90 | 3.67 |
| 22 | 1.53 | 0.25 | 1.66 | 0.39 | 1.75 | 0.47 | 2.09 | 0.97 | 2.48 | 1.90 | 2.73 | 3.10 |
| 26.5 | 1.48 | 0.22 | 1.60 | 0.34 | 1.68 | 0.41 | 1.99 | 0.84 | 2.31 | 1.64 | 2.51 | 2.62 |

As clear from comparison between Examples and Reference Examples above, enhancements in characteristics in both the results of the real part and the imaginary part were observed in comparison between the evaluation results in Examples where the phenol resin and the modified lignin were contained and Reference Examples where no modified lignin was contained.

Reference Signs List

A, B: laminated structure
1: first fiber-reinforced resin layer
2: foam layer
3: second fiber-reinforced resin layer
11: foam layer including conductive material at content of 0% by mass
12: foam layer including conductive material at content of 1% by mass
13: foam layer including conductive material at content of 5% by mass
14: foam layer including conductive material at content of 10% by mass
15: foam layer including conductive material at content of 20% by mass

**Claims**

1. A foam comprising a modified lignin chemically modified by polyethylene glycol.

2. The foam according to claim 1, further comprising a resin.

3. The foam according to claim 2, wherein the resin comprises at least one selected from the group consisting of a phenol resin, an epoxy resin, a cyanate ester resin, and a urethane resin.

4. The foam according to claim 2, wherein the resin comprises a phenol resin.

5. The foam according to claim 2, wherein the resin comprises an epoxy resin.

6. The foam according to claim 5, wherein the foam comprises a cured product of a curable resin composition comprising a modified lignin, an epoxy resin and a curing agent.

7. The foam according to claim 1, wherein a content of the modified lignin is 10 to 60% by mass based on a total amount of the foam.

8. The foam according to claim 1, wherein a compressive elastic modulus in a compression test according to JIS K 7220:2006 is 20 to 80 MPa.

9. The foam according to claim 1, wherein a compressive strength in a compression test according to JIS K 7220:2006 is 0.4 to 2.0 MPa.

10. A laminated structure comprising

   a first fiber-reinforced resin layer containing a resin and a fiber,
   a foam layer comprising the foam according to any one of claims 1 to 9, and
   a second fiber-reinforced resin layer containing a resin and a fiber,

   in this order.

11. The laminated structure according to claim 10, wherein the first fiber-reinforced resin layer and the second fiber-reinforced resin layer each comprise a modified lignin chemically modified by polyethylene glycol.

12. A foam comprising a modified lignin and a conductive material.

13. The foam according to claim 12, wherein the modified lignin comprises a modified lignin chemically modified by polyethylene glycol.

14. The foam according to claim 12, wherein a content of the modified lignin is 10 to 99% by mass based on a total amount of the foam.

15. The foam according to claim 12, wherein the conductive material is conductive carbon.

16. The foam according to claim 12, wherein the conductive material is carbon black.

17. The foam according to claim 12, wherein a content of the conductive material is 1 to 30% by mass based on a total amount of the foam.

18. The foam according to claim 12, wherein an expansion ratio of the foam is 2 to 20 times.

19. The foam according to claim 12, further comprising a resin.

20. The foam according to claim 19, wherein the resin comprises a phenol resin.

21. The foam according to claim 19, wherein a content of the resin is 1 to 89% by mass based on a total amount of the foam.

22. The foam according to any one of claims 1 to 9 and 12 to 21, wherein the foam is biodegradable.

23. A laminated structure wherein

a plurality of layers each made of the foam according to any one of claims 12 to 21 are stacked, and contents of the conductive materials in the layers are mutually different.

24. The laminated structure according to claim 23, wherein, under the assumption that the layer located at the n-th from the outermost layer is an n-th layer and a content of the conductive material in the n-th layer is $A_n$, and the layer located at the n-1-th is an n-1-th layer and a content of the conductive material in the n-1-th layer is $A_{n-1}$,

any n satisfies the following relational expression (1):

$$A_{n-1} < A_n \quad (1)$$

wherein n is an integer of 2 or more and equal to or less than the number of stacked layers each made of the foam.

25. The laminated structure according to claim 23, wherein the laminated structure is for radio wave absorption.

[Figure 1]

<u>A</u>

1

2

3

[Figure 2]

<u>B</u>

11

12

13

14

15

16

17

# EP 4 524 186 A1

<table>
<tr><td colspan="2" align="center">INTERNATIONAL SEARCH REPORT</td><td colspan="2">International application No.<br><br>**PCT/JP2023/017881**</td></tr>
</table>

**A. CLASSIFICATION OF SUBJECT MATTER**

*C08J 9/04*(2006.01)i; *B32B 5/28*(2006.01)i; *C08L 97/00*(2006.01)i; *C08L 101/00*(2006.01)i
FI: C08J9/04 101; B32B5/28 101; C08L101/00; C08L97/00

According to International Patent Classification (IPC) or to both national classification and IPC

**B. FIELDS SEARCHED**

Minimum documentation searched (classification system followed by classification symbols)

C08J9/04; B32B5/28; C08L97/00; C08L101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-277615 A (TOSHIBA CORP) 02 October 2003 (2003-10-02) | 1-9, 22 |
| | claims, paragraphs [0014]-[0018], [0073], [0095]-[0096], examples | |
| A | | 10-11, 23-25 |
| X | JP 2020-203968 A (AIST) 24 December 2020 (2020-12-24) | 1-3, 5-9, 12-15, 17-19, 21-22 |
| | claims, paragraphs [0037], [0069], [0080], examples | |
| Y | | 20 |
| A | | 10-11, 23-25 |
| X | JP 8-225628 A (ELASTOGRAN GMBH) 03 September 1996 (1996-09-03) | 1-2, 7-9, 12-19, 21-22 |
| | claims, paragraphs [0022]-[0024], [0055]-[0062], examples | |
| A | | 10-11, 23-25 |
| X | JP 2010-254952 A (HISHIE KAGAKU KK) 11 November 2010 (2010-11-11) | 12, 14-19, 21-22 |
| | claims, paragraph [0059], examples | |
| A | | 10-11, 23-25 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/017881**

C.     **DOCUMENTS CONSIDERED TO BE RELEVANT**

| Category* | Citation of document, with indication, where appropriate, of the relevant passages | Relevant to claim No. |
|---|---|---|
| Y | JP 2011-219734 A (HITACHI CHEM CO LTD) 04 November 2011 (2011-11-04)<br>claims, paragraph [0032], examples | 1-9, 22 |
| A | | 10-11, 23-25 |
| Y | JP 2021-123717 A (FOREST RES AND MANAGEMENT ORGANIZATION) 30 August 2021 (2021-08-30)<br>claims, paragraph [0016], examples | 1-9, 20, 22 |
| A | | 10-11, 23-25 |
| A | JP 2006-156750 A (TORAY IND INC) 15 June 2006 (2006-06-15)<br>entire text | 1-25 |

Form PCT/ISA/210 (second sheet) (January 2015)

**INTERNATIONAL SEARCH REPORT**
Information on patent family members

International application No.

**PCT/JP2023/017881**

| Patent document cited in search report | | | Publication date (day/month/year) | Patent family member(s) | Publication date (day/month/year) |
|---|---|---|---|---|---|
| JP | 2003-277615 | A | 02 October 2003 | (Family: none) | |
| JP | 2020-203968 | A | 24 December 2020 | (Family: none) | |
| JP | 8-225628 | A | 03 September 1996 | US 5834529 A claims, column 5, line 11 to column 6, line 10, column 12, line 15 to column 13, line 12, examples | |
| JP | 2010-254952 | A | 11 November 2010 | (Family: none) | |
| JP | 2011-219734 | A | 04 November 2011 | US 2012/0302699 A1 claims, paragraph [0058], examples | |
| JP | 2021-123717 | A | 30 August 2021 | (Family: none) | |
| JP | 2006-156750 | A | 15 June 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017197517 A
- JP 2019108490 A